# EUROPÄISCHE PATENTSCHRIFT

(11) **EP 2 949 911 B1**
(45) Veröffentlichungstag und Bekanntmachung des Hinweises auf die Patenterteilung: **08.05.2019**
(21) Anmeldenummer: 15000673.2
(22) Anmeldetag: 07.03.2015
(51) Int. Cl.: F02M 35/02, B01D 45/16, B01D 50/00, F16K 31/12, F16K 11/10, F16K 15/16, F02M 35/022

(54) **VENTILPLATTENEINRICHTUNG, INSBESONDERE FÜR EINE FILTERVORRICHTUNG FÜR EIN KRAFTFAHRZEUG**
VALVE PANEL DEVICE, IN PARTICULAR FOR A FILTER DEVICE FOR A MOTOR VEHICLE
DISPOSITIF DE LAMES DE SOUPAPE, NOTAMMENT POUR UN DISPOSITIF DE FILTRE POUR UN VÉHICULE AUTOMOBILE

(30) Priorität: 27.05.2014 DE 102014007896
(43) Veröffentlichungstag der Anmeldung: 02.12.2015
(60) Teilanmeldung: 19155227.2
(73) Patentinhaber: MAN Truck & Bus AG, 80995 München (DE)
(72) Erfinder: Scherfenberg, Sönke, 38685 Langelsheim (DE)
(74) Vertreter: v. Bezold & Partner Patentanwälte - PartG mbB

(56) Entgegenhaltungen:
- EP-A2- 1 568 861
- WO-A1-03/010455
- DE-A1- 2 501 822
- DE-A1- 3 909 346
- DE-A1-102006 038 700
- DE-A1-102008 062 955
- DE-A1-102013 004 249
- GB-A- 250 856
- JP-A- S6 148 676
- JP-A- H03 177 664

## Beschreibung

Die Erfindung betrifft eine Ventilplatteneinrichtung, vorzugsweise für eine Vorrichtung mit schwankenden Druckverhältnissen und/oder schwankenden Volumenströmen, insbesondere für eine Filtervorrichtung für ein Kraftfahrzeug.

DE 25 01 822 A1 offenbart ein Rückschlagventil, insbesondere für die Ansaugleitung von Drehkolbenmotoren oder Spülpumpen, mit einem Sitzkörper, der aus mehreren, parallel nebeneinander angeordneten U-förmigen oder in Form eines Kammes mit einseitig offenen Ausschnitten ausgebildeten Sitzplatten besteht, zwischen denen Hubbeilagen vorgesehen sind, welche die Sitzplatten im Abstand voneinander halten und auf den Seiten derselben flexible Ventilzungen festspannen, wobei die flexiblen Ventilzungen in ihrem die Hubbewegung ausführenden freien Bereich ungleich steif ausgeführt sind. DE 10 2006 038 700 A1 bezieht sich auf eine Vorrichtung zur Abscheidung von Flüssigkeiten aus Gasen, insbesondere zur Abtrennung von Ölpartikeln aus Blow-By-Gasen der Kurbelgehäuseentlüftung von Verbrennungsmotoren. Einzelne Durchflussrohre weisen an ihrem in Gaseinlassrichtung zeigenden Ende mindestens eine tangential angeordnete Gaseinlassöffnung auf und sind an der zu dieser angrenzenden Stirnseite mittels einer Abdeckung verschlossen, wobei in den Durchflussrohren eine kombinierte Rotations- und Axialströmung mit einer Drallkomponente entsteht und die Rotationsströmung in den einzelnen Rohren mehrmals um 360° rotiert. Zum allgemeinen Stand der Technik kann ferner die JP H03 177664 A und die EP 1 568 861 A2 genannt werden.

Filtervorrichtungen für Kraftfahrzeuge, z.B. für Kraftfahrzeug-Motoren, weisen meist einen optionalen Vorabscheider und einen Hauptfilter auf. Der Vorabscheider ist meist als einstufiger Zyklonluftfilter mit einem oder mehreren parallel angeordneten Zyklonen aufgebaut. Der Hauptfilter umfasst meist ein austauschbares Filterelement. Der Hauptfilter ist erforderlich, da der als Zyklonluftfilter ausgeführte Vorabscheider über keine ausreichende Abscheideleistung verfügt, insbesondere weil der beaufschlagte Volumenstrom so gut wie nie den optimalen Arbeitsbereich erreicht, z.B. durch die permanent wechselnde Unterdruckerzeugung und/oder Drehzahl des Kraftzeug-Motors. Zudem erzeugt der Vorabscheider meist einen unwirtschaftlich hohen Widerstand. Das austauschbare Filterelement des Hauptfilters ist nachteilhaft, weil es relativ teuer, umweltschädlich und aufwendig zu wechseln ist sowie einen steigenden Druckverlust bzw. steigenden Widerstand erzeugt. Im Stand der Technik sind ferner Luftvorfilter für Kraftfahrzeuge bekannt, die aus parallel angeordneten Zyklonen bestehen. Durch den schwankenden Volumenstrombedarf der Kraftfahrzeugmotoren können die Luftvorfilter nicht kontinuierlich im optimalen Wirkbereich arbeiten.

Eine Aufgabe der Erfindung ist es, eine Möglichkeit zu schaffen, mittels der vorstehend genannten Nachteile überwunden werden können. Diese Aufgabe kann mit den Merkmalen des Hauptanspruchs und des Nebenanspruchs gelöst werden. Vorteilhafte Weiterbildungen sind in den Unteransprüchen und der nachfolgenden Beschreibung offenbart.

Die Erfindung schafft eine Ventilplatteneinrichtung, vorzugsweise für eine Vorrichtung mit schwankenden Druckverhältnissen und/oder schwankenden Volumenströmen und/oder für eine Filtervorrichtung für ein Kraftfahrzeug, zweckmäßig einen Personenkraftwagen oder ein Nutzfahrzeug, z. B. einen Omnibus oder einen Lastkraftwagen. Die Filtervorrichtung ist vorzugsweise eine mehrstufige, insbesondere mehrstufig betreibbare Zyklon-Filtervorrichtung.

Die Ventilplatteneinrichtung weist zweckmäßig mehrere Durchgangsöffnungen und mehrere Lippen zum zweckmäßig fluidbeaufschlagungsabhängigen, insbesondere luftbeaufschlagungsabhängigen Öffnen und Schließen der Durchgangsöffnungen auf. Die Materialstärke der Ventilplatteneinrichtung und/oder die Materialstärke der Lippen nimmt zu einer Seite der Ventilplatteneinrichtung hin zu (z. B. in Längs- und/oder Querrichtung der Ventilplatteneinrichtung).

Dadurch sind die Lippen unterschiedlich schwer, weisen eine unterschiedliche Materialstärke auf und/oder besitzen unterschiedliche Öffnungs- und Schließwiderstände, so dass ein sukzessives Öffnen und Schließen letztgenannter Lippen ermöglicht wird. Die Lippen öffnen und/oder operieren somit zweckmäßig bei unterschiedlichen Ansprechdrücken oder -unterdrücken nacheinander.

Dadurch kann eine Vorrichtung mit schwankenden Druckverhältnissen/Volumenströmen und/oder eine Filtervorrichtung für ein Kraftfahrzeug durch mehrere parallele Systeme (z. B. die weiter unten erwähnten Zyklonanordnungen) mit im Wesentlichen gleichen Volumenströmen und/oder Druckverhältnissen ersetzt werden. Die schwankenden Druckverhältnisse und/oder Volumenströme können somit kompensiert werden, insbesondere zumindest nahezu vermieden werden.

Die Lippen sind aus der Ventilplatteneinrichtung selbst herausgearbeitet, z. B. ein- oder herausgeschnitten, ein- oder herausgelasert, ein- oder herausgestanzt, etc.. Die Ventilplatteneinrichtung und die Lippen sind somit vorzugsweise aus ein und demselben Basiselement ausgebildet. Dadurch ist die Ventilplatteneinrichtung nebst den Lippen z. B. einfach und kostengünstig in der Herstellung und der Montage.

Die Stärke der Ventilplatteneinrichtung und/oder die Stärke der Lippen kann zu einer Seite hin linear und somit quasi stufenfrei und/oder stufenförmig (z. B. treppenförmig, versatzförmig, etc.) zunehmen.

Es ist möglich, dass die Ventilplatteneinrichtung zumindest eine erste Ventilgruppe mit zumindest einer Lippe und zumindest eine zweite Ventilgruppe mit zumindest einer Lippe aufweist. Die Stärke der vorzugsweise mehreren Lippen der zweiten Ventilgruppe ist zweckmäßig größer als die Stärke der vorzugsweise mehreren Lippen der ersten Ventilgruppe. Die Lippen der ersten Ventilgruppe sind somit leichter als die Lippen der zweiten Ventilgruppe, weisen somit einen geringeren Öffnungswiderstand auf und öffnen sich folglich bei geringerer Fluidbeaufschlagung als die Lippen der zweiten Ventilgruppe.

Die Lippen der ersten Ventilgruppe weisen zweckmäßig die gleiche Stärke und somit den gleichen Öffnungswiderstand auf.

Die Lippen der zweiten Ventilgruppe weisen zweckmäßig die gleiche Stärke und somit den gleichen Öffnungswiderstand auf.

Die Ventilplatteneinrichtung kann mehr als zwei wie zuvor ausgeführte Ventilgruppen aufweisen.

Die Lippen sind im Wesentlichen Omega-förmig (Ω-förmig) ausgebildet. Dadurch kann der Lagerabschnitt der Lippen zur eigentlichen Ventilplatteneinrichtung vergrößert werden, wodurch die Lippen sicher gelagert sind und weniger dazu tendieren, einzureißen.

Die Lippen und/oder die Durchgangsöffnungen können versatzfrei oder mit Versatz zueinander ausgerichtet sein.

Die Ventilplatteneinrichtung kann quasi eine einzige Ventilplatte sein.

Die Ventilplatteneinrichtung kann ferner zweckmäßig mehrere, insbesondere separate, Ventilplattenabschnitte umfassen, denen vorzugsweise jeweils eine Ventilgruppe zugeordnet sein kann.

Die Ventilplatteneinrichtung und/oder die Lippen sind vorzugsweise aus Kunststoffmaterial und/oder Metall und/oder Gummi (z. B. Kautschuk) hergestellt.

Zu erwähnen ist, dass die Lippen zweckmäßig durch Fluidbeaufschlagung, insbesondere Luftbeaufschlagung (z. B. Druck- oder Unterdruck) öffenbar sind.

Die Erfindung ist nicht auf eine Ventilplatteneinrichtung beschränkt, sondern umfasst auch eine Filtervorrichtung für ein Kraftfahrzeug, mit zumindest einer Ventilplatteneinrichtung wie hierin beschrieben. Die Filtervorrichtung ist vorzugsweise eine mehrstufige, insbesondere mehrstufig betreibbare Zyklon-Filtervorrichtung.

Die Filtervorrichtung umfasst zweckmäßig zumindest eine Einlassöffnung für zu filternde Luft und zumindest eine Auslassöffnung für gefilterte Luft.

Die Filtervorrichtung weist zumindest eine Zyklonfilteranordnung auf, die eine erste Zyklonfiltereinrichtung und eine nachgeschaltete, stromabwärts dazu angeordnete zweite Zyklonfiltereinrichtung umfasst.

Die erste Zyklonfilteranordnung dient zweckmäßig dazu, groben Schmutz und bereits einen Teil des Feinstaubs aus der zu filternden Luft zu filtern, während die zweite Zyklonfiltereinrichtung zweckmäßig dazu dient, Feinstaub und/oder mikroskopisch kleine Partikel aus der zu reinigenden Luft zu filtern.

Es ist möglich, dass die Filtervorrichtung zumindest zwei parallel zu der Zyklonfiltanordnung betreibbare zusätzliche Zyklonfilteranordnungen aufweist, nämlich zumindest eine zweite Zyklonfilteranordnung und eine dritte Zyklonfilteranordnung.

Die zweite Zyklonfilteranordnung umfasst zweckmäßig eine erste Zyklonfiltereinrichtung und eine nachgeschaltete zweite Zyklonfiltereinrichtung.

Die dritte Zyklonfilteranordnung umfasst zweckmäßig eine erste Zyklonfiltereinrichtung und eine nachgeschaltete zweite Zyklonfiltereinrichtung.

Es ist möglich, dass die zweite Zyklonfiltereinrichtung der ersten Zyklonfilteranordnung zumindest zwei Zykloneinheiten umfasst.

Es ist möglich, dass die zweite Zyklonfiltereinrichtung der zweiten Zyklonfilteranordnung zumindest zwei Zykloneinheiten umfasst.

Es ist möglich, dass die zweite Zyklonfiltereinrichtung der dritten Zyklonfilteranordnung zumindest zwei Zykloneinheiten umfasst.

Die zweite Zyklonfilteranordnung und die dritte Zyklonfilteranordnung sind zweckmäßig bedarfsabhängig, nacheinander und/oder volumenstromabhängig (z. B. druck- oder unterdruckabhängig) dazu- oder abschaltbar. Dadurch kann vorzugsweise ermöglicht werden, dass die Filtervorrichtung mit vordefiniert gleichbleibender Qualität, insbesondere in Bezug auf den Abscheidegrad, arbeitet und zwar zweckmäßig unabhängig davon, wie hoch der Volumenstrom (z. B. der Druck-/Unterdruck), die Schmutzbelastung und/oder wie lange die Betriebsdauer ist. Die Anzahl der zusätzlichen Zyklonfilteranordnungen kann in Abhängigkeit des Volumenstrombedarfs und einer konstruktiven Bedarfsberechnung gewählt werden. Die Filtervorrichtung kann z. B. zumindest zwei, zumindest drei, zumindest vier, zumindest fünf oder sogar zumindest sechs zusätzliche Zyklonfilteranordnungen aufweisen. Je höher z. B. der Volumenstrombedarf (z. B. der Druck-/Unterdruck) und/oder die Drehzahl eines Kraftfahrzeug-Motors wird, desto mehr zusätzliche Zyklonfilteranordnungen können zweckmäßig sukzessive, insbesondere nacheinander, parallel dazugeschaltet werden.

Die Ventilplatteneinrichtung ist zweckmäßig der zweiten Zyklonfilteranordnung und der dritten Zyklonfilteranordnung zugeordnet. Insbesondere ist die erste Ventilgruppe der zweiten Zyklonfilteranordnung zugeordnet, die zweite Ventilgruppe der dritten Zyklonfilteranordnung zugeordnet, usw.. Dadurch können durch Öffnen und Schließen der Lippen die zweite Zyklonfilteranordnung und die dritte Zyklonfilteranordnung bedarfsabhängig, nacheinander und/oder volumenstromabhängig dazu- oder abgeschaltet werden. Steigt z. B. der Volumenstrombedarf, hat das zur Folge, das sich der Unterdruck/Druck in der Filtervorrichtung erhöht. Die Zyklonfilteranordnung erzeugt einen Widerstand. Übersteigt der Unterdruck/Druck einen bestimmten Wert, öffnen sich zunächst die Lippen der ersten Ventilgruppe und die zweite Zyklonfilteranordnung wird zweckmäßig dazugeschaltet, steigt der Unterdruck/Druck weiter, öffnen sich die Lippen der zweiten Ventilgruppe und die dritte Zyklonfilteranordnung wird dazugeschaltet, usw.. Bei abnehmendem Volumenstrombedarf schließen sich die Lippen in umgekehrter Reihenfolge, so dass zunächst die dritte Zyklonfilteranordnung und danach die zweite Zyklonfilteranordnung abgeschaltet werden.

Vorzugsweise ist die erste Ventilgruppe der zweiten Zyklonfilteranordnung zugeordnet und die zweite Ventilgruppe der dritten Zyklonfilteranordnung zugeordnet.

Die Ventilplatteneinrichtung ist der zweiten Zyklonfilteranordnung und der dritten Zyklonfilteranordnung nachgeschaltet.

Die Filtervorrichtung kann zumindest zwei, zumindest drei oder zumindest vier oder mehr parallel zu der Zyklonfilteranordnung betreibbare zusätzliche Zyklonfilteranordnungen aufweisen, denen zweckmäßig ebenfalls eine Ventilplatteneinrichtung zugeordnet sein kann.

Es ist möglich, dass die Filtervorrichtung eine einzige Einlassöffnung aufweist, über die die Zyklonfilteranordnung und die zumindest zwei zusätzlichen Zyklonfilteranordnungen mit zu filternder Luft versorgbar sind und/oder eine einzige Ausgangsöffnung aufweist, über die die von der Zyklonfilteranordnung und den zumindest zwei zusätzlichen Zyklonfilteranordnungen gefilterte Luft aus der Filtervorrichtung abführbar ist.

Darüber hinaus kann die Zyklonfilteranordnung und die zumindest zwei zusätzlichen Zyklonfilteranordnungen in demselben Gehäuse untergebracht werden.

Die Filtervorrichtung dient insbesondere als Filtervorrichtung zur Filterung von Luft für einen Kraftfahrzeug-Motor oder als Filtervorrichtung zur Filterung von Luft für einen Kraftfahrzeug-Innenraum.

Zu erwähnen ist, dass die Ventilplatteneinrichtung sich insbesondere für eine Vorrichtung mit schwankenden Druckverhältnissen und/oder schwankenden Volumenströmen eignet, allerdings nach deren Einbau in die Vorrichtung die schwankenden Druckverhältnisse und/oder die schwankenden Volumenströme kompensiert werden, vorzugsweise zumindest nahezu beseitigt werden.

Zu erwähnen ist außerdem, dass die Ventilplatteneinrichtung vorzugsweise als Nachrüst- oder Ersatzteil ausgeführt ist, um z. B. einzelne Ventile (z. B. Unterdruckventile, Membranventile, Federventile, etc.) zu ersetzen. Die Ventilplatteneinrichtung kann somit in bereits bestehende Filtervorrichtungen oder Vorrichtung allgemein eingebaut werden, um diese zu optimieren.

Die Erfindung umfasst ferner ein Kraftfahrzeug, z. B. einen Personenkraftwagen oder ein Nutzfahrzeug, insbesondere einen Lastkraftwagen oder einen Omnibus sowie Fahrzeuge für die Land-, Forst- und Bauwirtschaft, mit zumindest einer Ventilplatteneinrichtung und/oder einer Filtervorrichtung wie hierin offenbart.

Die oben beschriebenen bevorzugten Ausführungsformen der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Seitenansicht einer Ventilplatteneinrichtung gemäß einer Ausführungs-form der Erfindung,
- Figur 2: zeigt eine Draufsicht auf die Ventilplatteneinrichtung der Figur 1,
- Figur 3: zeigt eine schematische Darstellung einer Filtervorrichtung für ein Kraftfahrzeug mit einer Ventilplatteneinrichtung gemäß einer Ausführungsform der Erfindung,
- Figur 4: zeigt eine andere schematische Darstellung der Filtervorrichtung der Figur 3 und
- Figur 5: zeigt eine schematische Darstellung einer Ventilplatteneinrichtung gemäß einer Ausführungsform der Erfindung.

Die unter Bezugnahme auf die Figuren beschriebenen Ausführungsformen stimmen teilweise überein, wobei ähnliche oder identische Teile mit den gleichen Bezugszeichen versehen sind und zu deren Erläuterung auch auf die Beschreibung der anderen Ausführungsformen oder Figuren verwiesen, um Wiederholungen zu vermeiden.

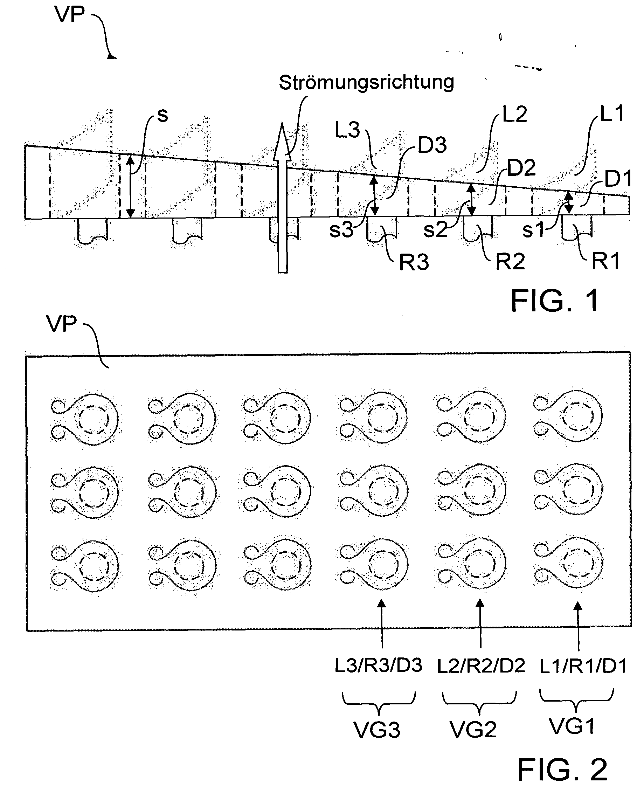

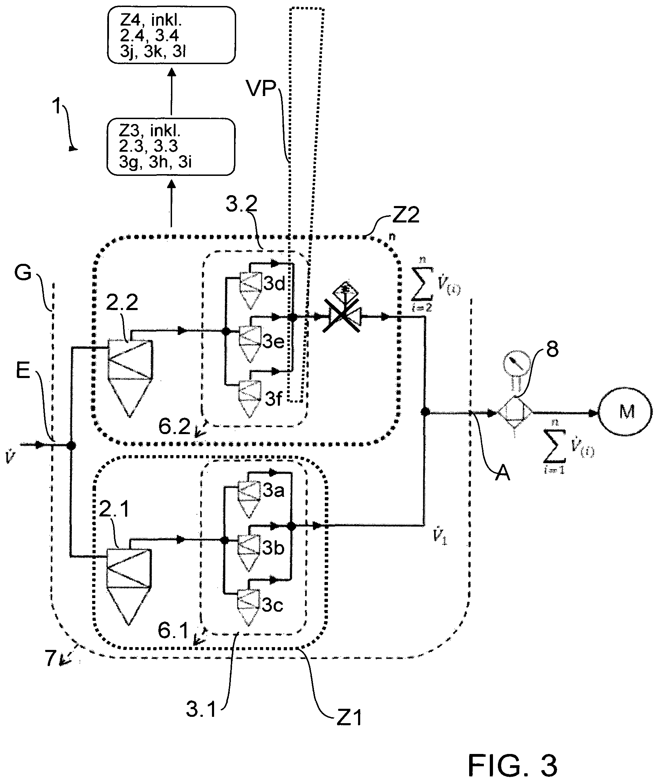

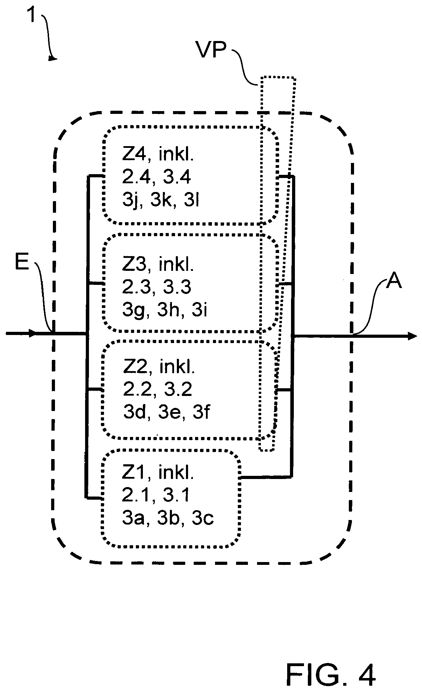

Figur 1 zeigt eine Seitenansicht einer Ventilplatteneinrichtung VP gemäß einer Ausführungsform der Erfindung, vorzugsweise zur Integration in eine Filtervorrichtung 1 für ein Kraftfahrzeug (Figuren 3 und 4), während Figur 2 eine zugehörige Seitenansicht zeigt. Die Ventilplatteneinrichtung VP wird nachfolgend unter Bezugnahme auf die Figuren 1 und 2 beschrieben.

Die Ventilplatteneinrichtung VP ist aus einer Ventilplatte ausgebildet und umfasst eine Vielzahl von Ventilgruppen, von denen der Übersichtlichkeit halber nur drei mit Bezugszeichen VG1, VG2 und VG3 versehen sind.

Die erste Ventilgruppe VG1 umfasst (z. B. drei) Durchgangsöffnungen D1 und (z. B. drei) Lippen L1 zum Öffnen und Schließen der Durchgangsöffnungen D1. Die Lippen L1 sind über (z. B. drei) Leitungen R1 und die Durchgangsöffnungen D1 mit einem Fluid, insbesondere Luft, beaufschlagbar.

Die zweite Ventilgruppe VG2 umfasst (z. B. drei) Durchgangsöffnungen D2 und (z. B. drei) Lippen L2 zum Öffnen und Schließen der Durchgangsöffnungen D2. Die Lippen L2 sind über (z. B. drei) Leitungen R2 und die Durchgangsöffnungen D2 mit einem Fluid, insbesondere Luft, beaufschlagbar.

Die dritte Ventilgruppe VG3 umfasst (z. B. drei) Durchgangsöffnungen D3 und (z. B. drei) Lippen L3 zum Öffnen und Schließen der Durchgangsöffnungen D3. Die Lippen L3 sind über (z. B. drei) Leitungen R3 und die Durchgangsöffnungen D3 mit einem Fluid, insbesondere Luft, beaufschlagbar.

Zu erwähnen ist, dass die Ventilgruppen auch nur eine Lippe und nur eine Durchgangsöffnung aufweisen können.

Die in Figur 1 gepunktet Linien illustrieren die Lippen L1, L2, L3 in geöffneten Zustand.

Die Leitungen R1, R2 und R3 können vorzugsweise mit Zyklyonfilteranordnungen verbunden sein.

Die (Material-) Stärke s der Ventilplatteneinrichtung VP und somit der Lippen L1, L2, L3 nimmt zu einer Seite hin zu, in Figur 1 von rechts nach links. In Figur 1 nimmt die Stärke s der Ventilplatteneinrichtung VP und der Lippen L1, L2, L3 linear und somit ohne Versatz bzw. gleichmäßig zu. So ist die mittlere Stärke s1 der Lippen L1 kleiner als die mittlere Stärke s2 der Lippen L2 und die mittlere Stärke s2 der Lippen L2 ist kleiner als die mittlere Stärke s3 der Lippen L3.

Wegen der zunehmenden Stärke s in Figur 1 von rechts nach links, sind die Lippen L2 schwerer als die Lippen L1 und die Lippen L3 sind schwerer als die Lippen L2. Dadurch weisen die Lippen L1, L2, L3 einen unterschiedlichen Öffnungs- und Schließwiderstand auf, wenn sie über die Leitungen R1, R2, R3 mit einem Fluid beaufschlagt werden.

Die Lippen L1 der Ventilgruppe VG1 sind zweckmäßig gleich schwer und weisen die gleiche mittlere Stärke s1 auf. Die Lippen L2 der Ventilgruppe VG2 sind zweckmäßig ebenfalls gleich schwer und weisen die gleiche mittlere Stärke s2 auf. Die Lippen L3 der Ventilgruppe VG3 sind auch zweckmäßig gleich schwer und weisen die gleiche mittlere Stärke s3 auf.

Die Lippen L1, L2, L3 sind aus der Ventilplatteneinrichtung VP selbst herausgearbeitet, z. B. herausgeschnitten, herausgelasert, herausgestanzt, etc.. Sie sind somit nicht als separate Lippen an die eigentliche Ventilplatteneinrichtung montiert, z. B. geklebt oder anderweitig befestigt. Es ist möglich, dass die Lippen L1, L2, L3 aus der Ventilplatteneinrichtung VP selbst herausgearbeitet sind, z. B. ein- oder herausgeschnitten, ein- oder herausgelasert, ein- oder herausgestanzt, etc.. Die Ventilplatteneinrichtung VP und die Lippen L1, L2, L3 sind somit vorzugsweise aus ein und demselben Basiselement ausgebildet. Dadurch ist die Ventilplatteneinrichtung VP nebst den Lippen L1, L2, L3 z. B. einfach und kostengünstig in der Herstellung und der Montage. Allerdings sind ebenso Ausführungsformen möglich, in denen die Lippen als quasi separate Teile an die Ventilplatteneinrichtung montiert sind, z. B. geklebt oder anderweitig befestigt.

Die Lippen L1, L2, L3 sind vorzugsweise im Wesentlichen Omega-förmig (Ω-förmig) ausgebildet. Dadurch wird ermöglicht, dass die Lagerabschnitte der Lippen L1, L2, L3 zur eigentlichen Ventilplatteneinrichtung VP vergrößert sind und nicht oder weniger dazu tendieren, einzureißen.

Die Ventilgruppen VG1, VG2, VG3 sind versatzfrei zueinander ausgerichtet. Es sind allerdings auch Ausführungsformen möglich, in denen die Ventilgruppen VG1, VG2, VG3 versetzt zueinander ausgerichtet sind.

Die Ventilplatteneinrichtung VP und somit die Lippen L1, L2, L3 sind aus einem Kunststoffmaterial hergestellt.

Die Figuren 3 und 4 zeigen zum Teil schematisch eine Filtervorrichtung 1 gemäß einer Ausführungsform der Erfindung für ein Kraftfahrzeug mit einer Ventilplatteneinrichtung VP, die grundsätzlich wie in Figuren 1 und 2 gezeigt ausgeführt sein kann. Die Filtervorrichtung 1 wird nachfolgend unter Bezugnahme auf die Figuren 3 und 4 beschrieben.

Die Filtervorrichtung 1 ist als Filtervorrichtung zur Filterung von Luft für einen Kraftfahrzeug-Motor M ausgeführt. Die Filtervorrichtung 1 umfasst ein Gehäuse G und eine Einlassöffnung E für die zu filternde Luft und eine Auslassöffnung A für gefilterte Luft.

Die Filtervorrichtung 1 umfasst insbesondere eine Zyklonfilteranordnung Z1, die eine erste Zyklonfiltereinrichtung 2.1 zweckmäßig für groben Schmutz und eine nachgeschaltete zweite Zyklonfiltereinrichtung 3.1 zweckmäßig für feinen Schmutz (z. B. Feinstaub) umfasst.

Die zweite Zyklonfiltereinrichtung 3.1 umfasst drei zweckmäßig parallel betreibbare Zykloneneinheiten 3a, 3b und 3c. Die Zyklonfiltereinrichtung 3.1 kann eine Ausgangsöffnung 6.1 für Schmutz und/oder Wasser aufweisen.

Die Filtervorrichtung 1 umfasst zudem zumindest zwei parallel zu der Zyklonfilteranordnung Z1 betreibbare Zyklonfilteranordnungen, nämlich eine zweite Zyklonfilteranordnung Z2 und eine dritte Zyklonfilteranordnung Z3.

Die Zyklonfilteranordnung Z2 umfasst eine erste Zyklonfiltereinrichtung 2.2 für groben Schmutz und eine nachgeschaltete zweite Zyklonfiltereinrichtung 3.2 für feinen Schmutz (z. B. Feinstaub). Die zweite Zyklonfiltereinrichtung 3.2 umfasst drei parallel betreibbare Zyklonfiltereinheiten 3d, 3e und 3f. Die Zyklonfiltereinrichtung 3.2 kann eine Ausgangsöffnung 6.2 für Schmutz und/oder Wasser aufweisen.

Die Zyklonfilteranordnung Z3 ist grundsätzlich gleich wie die Zyklonfilteranordnung Z2 aufgebaut und umfasst somit insbesondere eine erste Zyklonfiltereinrichtung 2.3 für groben Schmutz und eine nachgeschaltete zweite Zyklonfiltereinrichtung 3.3 für feinen Schmutz (z. B. Feinstaub). Die zweite Zyklonfiltereinrichtung 3.3 umfasst drei parallel betreibbare Zyklonfiltereinheiten 3g, 3h und 3i.

Eine optionale vierte Zyklonfilteranordnung Z4 kann ebenso grundsätzlich gleich wie die Zyklonfilteranordnung Z2 aufgebaut sein und somit ebenfalls insbesondere eine erste Zyklonfiltereinrichtung 2.4 für groben Schmutz und eine nachgeschaltete zweite Zyklonfiltereinrichtung 3.4 für feinen Schmutz (z. B. Feinstaub) aufweisen. Die zweite Zyklonfiltereinrichtung 3.4 umfasst drei parallel betreibbare Zyklonfiltereinheiten 3j, 3k und 3l. Die Filtervorrichtung 1 kann über die Zyklonfilteranordnung Z4 hinaus weitere Zyklonfilteranordnungen aufweisen, kann allerdings auch ohne die Zyklonfilteranordnung Z4 ausgeführt werden, so dass die Zyklonfilteranordnung Z4 nachfolgend ausgeblendet wird.

Die Zyklonfilteranordnungen Z1, Z2, Z3 sind vorzugsweise in ein und demselben Gehäuse G untergebracht und werden über die Einlassöffnung E mit zu filternder Luft versorgt und geben ihre gefilterte Luft über die Ausgangsöffnung A aus der Filtervorrichtung 1 aus.

Die Ventilplatteneinrichtung VP ist den Zyklonfilteranordnungen Z2, Z3 zugeordnet, insbesondere nachgeschaltet.

Die Ventilgruppe VG1 ist der Zyklonfilteranordnung Z2 zugeordnet und wird folglich von der Zyklonfilteranordnung Z2 über die Leitung R1 mit Luft oder allgemein Fluid beaufschlagt.

Die Ventilgruppe VG2 ist der Zyklonfilteranordnung Z3 zugeordnet und wird folglich von der Zyklonfilteranordnung Z3 über die Leitung R2 mit Luft oder allgemein Fluid beaufschlagt.

Dadurch, dass die Lippen L1 der ersten Ventilgruppe VG leichter sind und somit einen kleineren Öffnungswiderstand aufweisen als die Lippen L2 der zweiten Ventilgruppe VG2, öffnen sich bei steigendem Druck/Unterdruck zunächst die Lippen L1 und die Zyklonfilteranordnung Z2 wird aktiv. Steigt der Druck/Unterdruck weiter, öffnen sich die Lippen L2 und die Zyklonfilteranordnung Z3 wird aktiviert.

Dadurch können die Zyklonfilteranordnungen Z2 und Z3 bedarfsabhängig und/oder volumenstromabhängig sukzessive hinzu- und abgeschaltet werden. Das bedarfsabhängige und/oder volumenstromabhängige Dazu- oder Abschalten ermöglicht insbesondere, dass die Filtervorrichtung 1 quasi stets in einem optimierten Wirkbereich arbeiten kann und zwar im Wesentlichen unabhängig von einem sich ändernden Volumenstrombedarf und/oder der Betriebsdauer der Filtervorrichtung. Insbesondere können die Zyklonfilteranordnungen Z1, Z2, Z3 mit einem vordefinierten Volumenstrom, vorzugsweise einem weitestgehend gleichbleibenden oder konstanten Volumenstrom, beaufschlagt werden. Ferner kann z. B. auf einen separaten Vorabscheider verzichtet werden, selbst bei hoher Schmutzbelastung.

Die Filtervorrichtung 1 kann außerdem eine Sicherheitseinrichtung 8 aufweisen, die zwischen dem Kraftfahrzeug-Motor M und der Auslassöffnung A angeordnet ist. Die Sicherheitseinrichtung 8 umfasst ein Filterelement und einen Druckwächter, wobei der Druckwächter aktiviert wird, wenn das Filterelement mit zu verstaubter Luft beaufschlagt wird.

Die Filtervorrichtung 1 funktioniert im Wesentlichen wie folgt:
Erhöht sich der Volumenstrombedarf (z. B. weil sich die Drehzahl eines Kraftfahrzeug-Motors weiter erhöht), hat das zur Folge, dass sich der Druck/Unterdruck in der Filtervorrichtung 1 erhöht. Die Zyklonfilteranordnung Z1 erzeugt einen Widerstand X1. Die Lippen L1 der Ventilgruppe VG1 öffnen sich, wenn der Druck/Unterdruck einen vorbestimmten Wert übersteigt, woraufhin die zusätzliche Zyklonfilteranordnung Z2 dazu geschaltet wird.

Erhöht sich der Volumenstrombedarf weiter (z. B. weil sich die Drehzahl des Kraftfahrzeug-Motors weiter erhöht), hat das zur Folge, dass sich der Druck/Unterdruck in der Filtervorrichtung 1 wieder weiter erhöht. Die Zyklonfilteranordnung Z2 erzeugt einen Widerstand X2. Die Lippen L2 der Ventilgruppe VG2 öffnen sich, wenn der Druck/Unterdruck einen vorbestimmten Wert übersteigt, woraufhin die Zyklonfilteranordnung Z3 dazu geschaltet wird.

Bei abnehmenden Volumenstrombedarf (z. B. aufgrund abnehmender Drehzahl des Kraftfahrzeug-Motors) schließen sich zunächst die Lippen L2, woraufhin die Zyklonfilteranordnung Z3 abgeschaltet wird, dann schließen sich die Lippen L1 der Ventilgruppe VG1, woraufhin die Zyklonfilteranordnung Z2 abgeschaltet wird.

Mit dem zuvor beschriebenen Prinzip ist es möglich, dass die Filtervorrichtung 1 durch bedarfsabhängiges, insbesondere volumenstromabhängiges, dazu- oder abschalten zumindest zweier zusätzlicher Zyklonfilteranordnungen quasi stets in einem optimalen Wirkbereich arbeitet und zwar zumindest nahezu unabhängig des sich ändernden Volumenstrombedarfs und/oder der Betriebsdauer der Filtervorrichtung 1 (durch gleichbleibende Druckdifferenz und sinkendem Gesamtwiderstand, je höher die Drehzahl des Kraftfahrzeug-Motors). Dadurch ist ein Kraftfahrzeug-Motor z. B. im Kraftstoffverbrauch sparsamer, hat bessere (umweltfreundlichere) Abgaswerte und einen höheren Wirkungsgrad. Elektromotoren können ebenso mit einem verbesserten Wirkungsgrad versehen werden, z. B. falls die Filtervorrichtung 1 zur Innenraumbelüftung des Kraftfahrzeugs eingesetzt wird.

Zu erwähnen ist, dass die Filtervorrichtung 1 mit Ausnahme der Ventilplatteneinrichtung VP grundsätzlich wie in DE 10 2013 004 249 A1 beschrieben ausgeführt sein kann, so dass der Inhalt letztgenannter Anmeldung der vorliegenden Offenbarung vollumfänglich zuzurechnen ist.

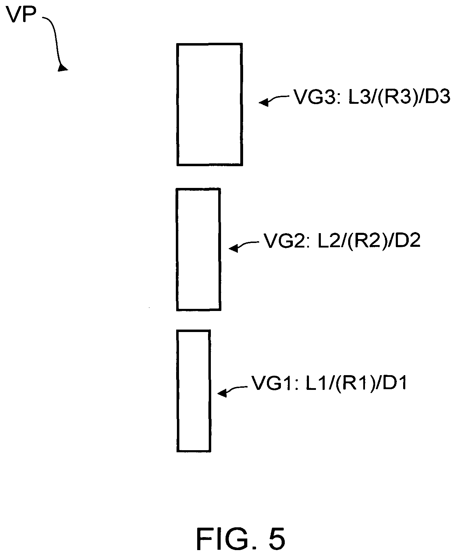

Figur 5 zeigt eine schematische Darstellung einer anderen Ventilplatteneinrichtung VP gemäß einer Ausführungsform der Erfindung. Die Ventilplatteneinrichtung VP der Figur 5 umfasst drei separate Ventilplattenabschnitte. Der in Figur 5 untere Ventilplattenabschnitt umfasst die erste Ventilgruppe VG1, der in Figur 5 mittlere Ventilplattenabschnitt umfasst die zweite Ventilgruppe VG2 und der in Figur 5 obere Ventilplattenabschnitt umfasst die dritte Ventilgruppe VG3. Die Stärke der Ventilplatteneinrichtung VP nimmt zu einer Seite hin zu, allerdings nicht wie in Figur 1 gezeigt linear, sondern stufenförmig (treppenförmig).

Die Erfindung ist nicht auf die oben beschriebenen bevorzugten Ausführungsformen beschränkt. Vielmehr ist eine Vielzahl von Varianten und Abwandlungen möglich. Der Schutzbereich wird jedoch durch die nachfolgenden Ansprüche definiert.

### Bezugszeichenliste

- VP: Ventilplatteneinrichtung
- D1, D2, D3: Durchgangsöffnungen
- L1, L2, L3: Lippen
- R1, R2, R3: Leitungen
- VG1: erste Ventilgruppe
- VG2: zweite Ventilgruppe
- VG3: dritte Ventilgruppe
- s, s1, s2, s3: Materialstärke der Ventilplatte und/oder der Lippen
- E: Einlassöffnung
- A: Auslassöffnung
- Z1: Zyklonfilteranordnung
- Z2: zweite Zyklonfilteranordnung
- Z3: dritte Zyklonfilteranordnung
- 2.1, 2.2, 2.3: erste Zyklonfiltereinrichtungen
- 3.1, 3.2, 3.3: zweite Zyklonfiltereinrichtung
- 3a bis 3c: Zykloneinheiten
- 3d bis 3f: Zykloneinheiten
- 3g bis 3i: Zykloneinheiten
- 3j bis 3l: Zykloneinheiten
- 6.1, 6.2: Ausgangsöffnung für Schmutz und/oder Wasser
- 7: Austrittsöffnung für Schmutz und/oder Wasser
- 8: Sichereitseinrichtung
- G: Gehäuse
- M: Kraftfahrzeug-Motor

## Patentansprüche

1. Ventilplatteneinrichtung (VP), vorzugsweise für eine Vorrichtung mit schwankenden Druckverhältnissen und/oder schwankenden Volumenströmen, insbesondere für eine Filtervorrichtung (1) für ein Kraftfahrzeug, wobei die Ventilplatteneinrichtung (VP) zumindest zwei Durchgangsöffnungen (D1, D2, D3) und zumindest zwei Lippen (L1, L2, L3) zum Öffnen und Schließen der Durchgangsöffnungen (D1, D2, D3) aufweist und die Stärke (s) der Ventilplatteneinrichtung (VP) und/oder der Lippen (L1, L2, L3) zu zumindest einer Seite hin zunimmt, vorzugsweise so, dass die Lippen (L1, L2, L3) unterschiedlich schwer sind und/oder einen unterschiedlichen Öffnungs- und Schließwiderstand aufweisen, wobei die Lippen (L1, L2, L3) aus der Ventilplatteneinrichtung (VP) selbst herausgearbeitet sind und die Ventilplatteneinrichtung (VP) eine Ventilplatte ist oder mehrere separate Ventilplattenabschnitte umfasst, wobei die Lippen (L1, L2, L3) Omega-förmig ausgebildet sind.

2. Ventilplatteneinrichtung (VP) nach Anspruch 1, wobei die Stärke (s) der Ventilplatteneinrichtung (VP) und/oder der Lippen (L1, L2, L3) zumindest zu einer Seite hin linear und/oder stufenförmig zunimmt.

3. Ventilplatteneinrichtung (VP) nach einem der vorhergehenden Ansprüche, wobei die Ventilplatteneinrichtung (VP) eine erste Ventilgruppe (VG1) mit zumindest einer Lippe (L1) und zumindest eine zweite Ventilgruppe (VG2) mit zumindest einer Lippe (L2) aufweist, wobei die zumindest eine Lippe (L2) der zweiten Ventilgruppe (VG2) schwerer ist als die zumindest eine Lippe (L1) der ersten Ventilgruppe (VG1).

4. Ventilplatteneinrichtung (VP) nach Anspruch 3, wobei die Lippen (L1) der ersten Ventilgruppe (VG1) die gleiche Stärke (s1) aufweisen und die Lippen (L2) der zweiten Ventilgruppe (VG2) die gleiche Stärke (s2) aufweisen.

5. Ventilplatteneinrichtung (VP) nach einem der vorhergehenden Ansprüche, wobei die Lippen (L1, L2, L3) und/oder die Durchgangsöffnungen (D1, D2, D3) versatzfrei oder mit Versatz zueinander ausgerichtet sind.

6. Ventilplatteneinrichtung (VP) nach einem der vorhergehenden Ansprüche, wobei die Ventilplatteneinrichtung (VP) und somit die Lippen (L1, L2, L3) aus Kunststoffmaterial und/oder Metall und/oder Gummi hergestellt sind.

7. Filtervorrichtung (1) für ein Kraftfahrzeug, mit zumindest einer Ventilplatteneinrichtung (VP) nach einem der vorhergehenden Ansprüche.

8. Filtervorrichtung (1) nach Anspruch 7, wobei die Filtervorrichtung (1) eine Zyklonfilteranordnung (Z1) umfasst, wobei die Zyklonfilteranordnung (Z1) eine erste Zyklonfiltereinrichtung (2.1) und eine nachgeschaltete zweite Zyklonfiltereinrichtung (3.1) umfasst.

9. Filtervorrichtung (1) nach Anspruch 7 oder 8, wobei die Filtervorrichtung (1) zumindest zwei parallel zu der Zyklonfilteranordnung (Z1) betreibbare zusätzliche Zyklonfilteranordnungen (Z2, Z3) aufweist, nämlich zumindest eine zweite Zyklonfilteranordnung (Z2) und eine dritte Zyklonfilteranordnung (Z3), wobei die zweite Zyklonfilteranordnung (Z2) eine erste Zyklonfiltereinrichtung (2.2) und eine nachgeschaltete zweite Zyklonfiltereinrichtung (3.2) umfasst und die dritte Zyklonfilteranordnung (Z3) eine erste Zyklonfiltereinrichtung (2.3) und eine nachgeschaltete zweite Zyklonfiltereinrichtung (3.3) umfasst.

10. Filtervorrichtung (1) nach Anspruch 8 oder 9, wobei die zweite Zyklonfiltereinrichtung (3.1) der ersten Zyklonfilteranordnung (Z1) zumindest zwei Zykloneinheiten (3a-3c) umfasst, die zweite Zyklonfiltereinrichtung (3.2) der zweiten Zyklonfilteranordnung (Z2) zumindest zwei Zykloneinheiten (3d-3f) umfasst und/oder die zweite Zyklonfiltereinrichtung (3.3) der dritten Zyklonfilteranordnung (Z3) zumindest zwei Zykloneinheiten (3g-3i) umfasst.

11. Filtervorrichtung (1) nach einem der Ansprüche 7 bis 10, wobei die Ventilplatteneinrichtung (VP) der zweiten Zyklonfilteranordnung (Z2) und der dritten Zyklonfilteranordnung (Z3) zugeordnet ist, um durch Öffnen und Schließen der Lippen (L1, L2) die zweite Zyklonfilteranordnung (Z2) und die dritte Zyklonfilteranordnung (Z3) bedarfsabhängig und/oder volumenstromabhängig dazu- oder abzuschalten.

12. Filtervorrichtung (1) nach Anspruch 11, wobei die erste Ventilgruppe (VG1) der zweiten Zyklonfilteranordnung (Z2) zugeordnet ist und die zweite Ventilgruppe (VG2) der dritten Zyklonfilteranordnung (Z3) zugeordnet ist, so dass zunächst durch Öffnen der Lippen (L1) der ersten Ventilgruppe (VG1) die zweite Zyklonfilteranordnung (Z2) zuschaltbar ist und danach bedarfsabhängig und/oder volumenstromabhängig die dritte Zyklonfilteranordnung (Z3) zuschaltbar ist.

13. Kraftfahrzeug, insbesondere Nutzfahrzeug, mit einer Ventilplatteneinrichtung (VP) nach einem der Ansprüche 1 bis 6 oder eine Filtervorrichtung (1) nach einem der Ansprüche 7 bis 12.

## Claims

1. A valve plate device (VP), preferably for an apparatus with fluctuating pressure conditions and/or fluctuating volumetric flows, in particular for a filter apparatus (1) for a motor vehicle, the valve plate device (VP) having at least two through openings (D1, D2, D3) and at least two lips (L1, L2, L3) for opening and closing the through openings (D1, D2, D3), and the thickness (s) of the valve plate device (VP) and/or of the lips (L1, L2, L3) increasing towards at least one side, preferably in such a way that the lips (L1, L2, L3) have different weights and/or have a different opening and closing resistance, the lips (L1, L2, L3) being machined out of the valve plate device (VP) itself, and the valve plate device (VP) being a valve plate or comprising a plurality of separate valve plate sections, the lips (L1, L2, L3) being of omega-shaped configuration.

2. The valve plate device (VP) according to Claim 1, the thickness (s) of the valve plate device (VP) and/or of the lips (L1, L2, L3) increasing at least towards one side in a linear and/or stepped manner.

3. The valve plate device (VP) according to either of the preceding claims, the valve plate device (VP) having a first valve group (VG1) with at least one lip (L1) and at least one second valve group (VG2) with at least one lip (L2), the at least one lip (L2) of the second valve group (VG2) being heavier than the at least one lip (L1) of the first valve group (VG1).

4. The valve plate device (VP) according to Claim 3, the lips (L1) of the first valve group (VG1) having the same thickness (s1), and the lips (L2) of the second valve group (VG2) having the same thickness (s2).

5. The valve plate device (VP) according to one of the preceding claims, the lips (L1, L2, L3) and/or the through openings (D1, D2, D3) being oriented in an offset-free manner or with an offset with respect to one another.

6. The valve plate device (VP) according to one of the preceding claims, the valve plate device (VP) and therefore the lips (L1, L2, L3) being manufactured from plastic material and/or metal and/or rubber.

7. A filter apparatus (1) for a motor vehicle, having at least one valve plate device (VP) according to one of the preceding claims.

8. The filter apparatus (1) according to Claim 7, the filter apparatus (1) comprising a cyclone filter arrangement (Z1), the cyclone filter arrangement (Z1) comprising a first cyclone filter device (2.1) and a downstream second cyclone filter device (3.1).

9. The filter apparatus (1) according to Claim 7 or 8, the filter apparatus (1) having at least two additional cyclone filter arrangements (Z2, Z3) which can be operated in parallel with the cyclone filter arrangement (Z1), namely at least a second cyclone filter arrangement (Z2) and a third cyclone filter arrangement (Z3), the second cyclone filter arrangement (Z2) comprising a first cyclone filter device (2.2) and a downstream second cyclone filter device (3.2), and the third cyclone filter arrangement (Z3) comprising a first cyclone filter device (2.3) and a downstream second cyclone filter device (3.3) .

10. The filter apparatus (1) according to Claim 8 or 9, the second cyclone filter device (3.1) of the first cyclone filter arrangement (Z1) comprising at least two cyclone units (3a-3c), the second cyclone filter device (3.2) of the second cyclone filter arrangement (Z2) comprising at least two cyclone units (3d-3f), and/or the second cyclone filter device (3.3) of the third cyclone filter arrangement (Z3) comprising at least two cyclone units (3g-3i).

11. The filter apparatus (1) according to one of Claims 7 to 10, the valve plate device (VP) being assigned to the second cyclone filter arrangement (Z2) and the third cyclone filter arrangement (Z3), in order to switch the second cyclone filter arrangement (Z2) and the third cyclone filter arrangement (Z3) on and off in a manner which is dependent on requirement and/or volumetric flow by way of opening and closing of the lips (L1, L2).

12. The filter apparatus (1) according to Claim 11, the first valve group (VG1) being assigned to the second cyclone filter arrangement (Z2), and the second valve group (VG2) being assigned to the third cyclone filter arrangement (Z3), with the result that first of all the second cyclone filter arrangement (Z2) can be switched on by way of opening of the lips (L1) of the first valve group (VG1), and the third cyclone filter arrangement (Z3) can be switched on subsequently in a manner which is dependent on requirement and/or volumetric flow.

13. A motor vehicle, in particular commercial vehicle, having a valve plate device (VP) according to one of Claims 1 to 6 or a filter apparatus (1) according to one of Claims 7 to 12.

## Revendications

1. Dispositif de lames de soupape (VP), de préférence destiné à un dispositif présentant des rapports de pression fluctuants et/ou des courants volumiques fluctuants, en particulier pour un dispositif de filtre (1) pour un véhicule automobile, dans lequel le dispositif de lames de soupape (VP) présente au moins deux ouvertures de passage (D1, D2, D3) et au moins deux lèvres (L1, L2, L3) pour ouvrir et fermer les ouvertures de passage (D1, D2, D3) et l'épaisseur (s) du dispositif de lames de soupape (VP) et/ou des lèvres (L1, L2, L3) augmente en direction d'au moins un côté, de préférence de telle manière que les lèvres (L1, L2, L3) soient différemment lourdes et/ou présentent une résistance à l'ouverture et à la fermeture différente, dans lequel les lèvres (L1, L2, L3) sont usinées hors du dispositif de lames de soupape lui-même (VP) et le dispositif de lames de soupape (VP) est une lame de soupape ou comprend plusieurs parties de lames de soupape séparées, dans lequel les lèvres (L1, L2, L3) sont réalisées en forme d'oméga.

2. Dispositif de lames de soupape (VP) selon la revendication 1, dans lequel l'épaisseur (s) du dispositif de lames de soupape (VP) et/ou des lèvres (L1, L2, L3) augmente de façon linéaire et/ou par paliers en direction d'au moins un côté.

3. Dispositif de lames de soupape (VP) selon l'une quelconque des revendications précédentes, dans lequel le dispositif de lames de soupape (VP) présente un premier groupe de soupapes (VG1) avec au moins une lèvre (L1) et au moins un second groupe de soupapes (VG2) avec au moins une lèvre (L2), dans lequel ladite au moins une lèvre (L2) du second groupe de soupapes (VG2) est plus lourde que ladite au moins une lèvre (L1) du premier groupe de soupapes (VG1).

4. Dispositif de lames de soupape (VP) selon la revendication 3, dans lequel les lèvres (L1) du premier groupe de soupapes (VG1) présentent la même épaisseur (s1) et les lèvres (L2) du second groupe de soupapes (VG2) présentent la même épaisseur (s2).

5. Dispositif de lames de soupape (VP) selon l'une quelconque des revendications précédentes, dans lequel les lèvres (L1, L2, L3) et/ou les ouvertures de passage (D1, D2, D3) sont alignées sans décalage ou avec un décalage l'une par rapport à l'autre.

6. Dispositif de lames de soupape (VP) selon l'une quelconque des revendications précédentes, dans lequel le dispositif de lames de soupape (VP) et dès lors les lèvres (L1, L2, L3) sont fabriqués en une matière plastique et/ou en métal et/ou en caoutchouc.

7. Dispositif de filtre (1) pour un véhicule automobile, avec au moins un dispositif de lames de soupape (VP) selon une des revendications précédentes.

8. Dispositif de filtre (1) selon la revendication 7, dans lequel le dispositif de filtre (1) comprend un agencement de filtre cyclone (Z1), dans lequel l'agencement de filtre cyclone (Z1) comprend un premier dispositif de filtre cyclone (2.1) et un second dispositif de filtre cyclone (3.1) placé en aval.

9. Dispositif de filtre (1) selon une revendication 7 ou 8, dans lequel le dispositif de filtre (1) présente au moins deux agencements de filtre cyclone supplémentaires (Z2, Z3) pouvant fonctionner en parallèle avec l'agencement de filtre cyclone (Z1), à savoir au moins un deuxième agencement de filtre cyclone (Z2) et un troisième agencement de filtre cyclone (Z3), dans lequel le deuxième agencement de filtre cyclone (Z2) comprend un premier dispositif de filtre cyclone (2.2) et un second dispositif de filtre cyclone (3.2) placé en aval et le troisième agencement de filtre cyclone (Z3) comprend un premier dispositif de filtre cyclone (2.3) et un second dispositif de filtre cyclone (3.3) placé en aval.

10. Dispositif de filtre (1) selon une revendication 8 ou 9, dans lequel le second dispositif de filtre cyclone (3.1) du premier agencement de filtre cyclone (Z1) comprend au moins deux unités de cyclone (3a-3c), le second dispositif de filtre cyclone (3.2) du deuxième agencement de filtre cyclone (Z2) comprend au moins deux unités de cyclone (3d-3f) et/ou le second dispositif de filtre cyclone (3.3) du troisième agencement de filtre cyclone (Z3) comprend au moins deux unités de cyclone (3g-3i).

11. Dispositif de filtre (1) selon l'une quelconque des revendications 7 à 10, dans lequel le dispositif de lames de soupape (VP) est associé au deuxième agencement de filtre cyclone (Z2) et au troisième agencement de filtre cyclone (Z3), afin de connecter ou de déconnecter le deuxième agencement de filtre cyclone (Z2) et le troisième agencement de filtre cyclone (Z3), en fonction des besoins et/ou en fonction du courant volumique, par l'ouverture et la fermeture des lèvres (L1, L2).

12. Dispositif de filtre (1) selon la revendication 11, dans lequel le premier groupe de soupapes (VG1) est associé au deuxième agencement de filtre cyclone (Z2) et le second groupe de soupapes (VG2) est associé au troisième agencement de filtre cyclone (Z3), de telle manière que le deuxième agencement de filtre cyclone (Z2) puisse d'abord être connecté par ouverture des lèvres (L1) du premier groupe de soupapes (VG1) et que le troisième agencement de filtre cyclone (Z3) puisse ensuite être connecté en fonction des besoins et/ou en fonction du courant volumique.

13. Véhicule automobile, en particulier véhicule utilitaire, doté d'un dispositif de lames de soupape (VP) selon l'une quelconque des revendications 1 à 6 ou d'un dispositif de filtre selon l'une quelconque des revendications 7 à 12.
